# EUROPÄISCHE PATENTSCHRIFT

(11) **EP 0 535 323 B1**
(45) Veröffentlichungstag und Bekanntmachung des Hinweises auf die Patenterteilung: **16.12.1998**
(21) Anmeldenummer: 92112914.4
(22) Anmeldetag: 29.07.1992
(51) Int. Cl.: H04N 9/77, H04N 9/64, H04N 5/14

(54) **Übertragungsanordnung zur Übertragung von Farbfernsehsignalen**
Transmission circuit for transmitting colour television signals
Circuit de transmission pour la transmission de signaux de télévision en couleur

(30) Priorität: 30.09.1991 DE 4132508
(43) Veröffentlichungstag der Anmeldung: 07.04.1993
(73) Patentinhaber: Nokia (Deutschland) GmbH, 75175 Pforzheim (DE)
(72) Erfinder: Reime, Gerd, W-7542 Schömberg 4 (DE)

(56) Entgegenhaltungen:
- EP-A- 0 302 500
- ELECTRONIC COMPONENTS AND APPLICATIONS, Bd.10, Nr.1, 1990, EINDHOVEN NL Seiten 37 - 47 KELTING 'TDA4670 Picture Signal Improvement (PSI) circuit'

## Beschreibung

Die Erfindung betrifft eine Übertragungsanordnung zur Übertragung von Farbfernsehsignalen für die Wiedergabe eines Farbfernsehbildes auf einem Bildschirm entsprechend dem Oberbegriff des Anspruches 1.

Bei der Übertragung von Farbfernsehbildern wird im allgemeinen die Farbinformation eines Farbfernsehbildes getrennt von der Leuchtdichteinformation übertragen, insbesondere um die Kompatibilität zur Schwarz-Weiß-Übertragung eines derartigen Fernsehbildes zu wahren. Der Übertragung der Farbsignale steht hierbei eine wesentlich geringere Frequenzbandbreite zur Verfügung als der Übertragung der Leuchtdichtesignale. Hinzu kommt, daß bei der Übertragung der Farbfernsehbilder die Farbsignale den Übertragungsmodus häufiger wechseln als die Leuchtdichtesignale. Dadurch sind die Farbsignale innerhalb einer Übertragung eines Farbfernsehbildes häufiger Störstellen innerhalb des Übertragungsweges ausgesetzt als die Leuchtdichtesignale. Diese Störstellen verflachen darüber hinaus insbesondere sprunghafte Änderungen der übertragenen Farbinformation an Störstellen im Übertragungsweg wegen der wesentlich geringeren Übertragungsbandbreite erheblich mehr als im Übertragungsweg der Leuchtdichtesignale die Leuchtdichtesprünge verflacht werden. Die Verflachung von ansich sprungartigen größeren Farbübergängen insbesondere in der Farbart bewirken am gestörten Farbübergang eine Farbänderung, die an einer senkrechten Farbkante des Originalbildes einen verhältnismäßig breiten, störenden Farbsaum einer zwischen der Farbart der beiden an der Sprungkante aneinandergrenzenden Farbflächen liegenden Farbart erzeugt. Außerdem liegt dieser störende Farbsaum meistens einseitig neben der originalen Farbsprungkante, so daß ein verzerrtes, oft deutlich neben den Leuchtdichtekonturen liegendes Farbbild wiedergegeben wird.

In der technischen Information TI 891023 der Firma Philips mit dem Titel "Die Schaltung TDA 46 70 zur Bildsignal-Nachverarbeitung im Fernsehempfänger" ist eine Schaltung zur Beseitigung der eben beschriebenen Fehlfarben im Farbsaum einer senkrechten Farbkante offenbart, die in den Farbdifferenzkanälen eines Fernsehempfängers Flankendetektoren enthält. Diese detektieren die Steigungen einer einen Sprung darstellenden Änderung der übertragenen Farbdifferenzsignale U und V und bilden daraus ein Schaltsignal für einen Analogsignalschalter im Signalweg dieser Differenzsignale. Dieser Schalter wird während des Erkennens einer dementsprechenden Steigung in den Farbdifferenzsignalen während der Dauer der Steigung geöffnet, so daß in einer Sample-and- Hold-Schaltung der in einem Speicherkondensator vor dem Öffnen des Schalters gespeicherte Signalwert während der Dauer des Öffnens des Schalters wirksam bleibt. Es hat sich jedoch gezeigt, daß in vielen Fällen, insbesondere wenn ein Videorecorder an den Fernseher angeschlossen ist, die störenden fehlfarbigen Farbsäume an senkrechten Farbkanten nicht beseitigt sind und weiterhin ein gestörtes, flaues Farbbild auf dem Bildschirm des Farbfernsehers wiedergegeben wird. Siehe in Bezug auf TDA 4670 auch ELECTRONIC COMPONENTS AND APPLICATIONS, Bd. 10., Nr. 1, 1990, EINDHOVEN NL, Seiten 37-47, KELTING 'TDA 4670 Picture Signal Improvement (PSI) circuit.' Weiterhin siehe EP-A-0 302 500.

Der Erfindung liegt die Aufgabe zugrunde, eine in einem Videogerät angeordnete Übertragungsanordnung zur Übertragung eines Farbfernsehsignales anzugeben, die auch unter ungünstigen Umständen einen Farbsaum einer störenden Fehlfarbe an senkrechten Farbkanten einer Farbbildwiedergabe auf dem Bildschirm eines Fernsehers weitgehend unterdrückt. Diese Aufgabe wird nach der Erfindung durch die im kennzeichnenden Teil des Anspruches 1 angegebenen Merkmale in vorteilhafter Weise gelöst.

Eine Übertragungsanordnung nach der Erfindung hat den Vorteil, daß sie an beliebigen Stellen in eine Farbbildübertragungsleitung, beispielsweise eines Farbfernsehgerätes oder eines Videorecorders eingeschaltet werden kann, wenn an diesen Stellen im Farbübertragungskanal ein insbesondere an Farbartsprüngen störend verfälschtes Farbsignal übertragen wird. Die erfindungsgemäße Übertragungsanordnung ersetzt dann an einer detektierten Farbsprungstelle den gestörten Bereich des Farbsignals durch einen ungestörten Abschnitt des übertragenen Farbsignals. Am Ausgang der erfindungsgemäßen Übertragungsanordnung steht somit wieder ein nahezu vollkommen ungestörtes Videosignal zur Wiedergabe auf einem Farbbildschirm zur Verfügung.

Die Unteransprüche kennzeichnen vorteilhafte Ausgestaltungen und Weiterbildungen der Erfindung. Um einen Leuchtdichtesprung und einen zugehörigen Farbsprung zur Deckung zu bringen ist es besonders vorteilhaft, sowohl einen Leuchtdichtesprungdetektor als auch einen Farbsprungdetektor zu verwenden und bei der Erkennung eines Leuchtdichtesprunges des in einer Videozeile übertragenen Leuchtdichtesignales den Kanalumschalter nur mit dem Detektorsignal des Leuchtdichtesprungdetektors in den den Ausgang des unverzögerten Kanalteils mit dem Ausgang des Farbkanals verbindendenden zweiten Schaltzustand des Kanalumschalters zu steuern.

In einer vorteilhaften Ausgestaltung der Erfindung ist zur Unterdrückung eines an einem Farbsprung innerhalb einer Videozeile während der Übertragung erzeugten Farbstörbereiches eines auf eine Farbträgerschwingung modulierten Farbsignals die Verzögerungszeit des verzögerten Kanalteils des Farbkanals exakt ein ganzes Vielfaches der Schwingungsdauer der Farbträgerschwingung. Durch diese Maßnahme wird erreicht, daß der ungestörte Schwingungszug der Farbträgerschwingung, durch den der gestörte Schwingungszug einer übertragenen Farbträgerschwingung an einer Farbsprungstelle ersetzt wird, phasenrichtig an die Stelle des gestörten Schwingungszuges in die Farbträgerschwingung eingefügt wird.

In einer besonders einfachen und wenig aufwendigen Ausgestaltung der Erfindung ist der Farbsprungdetektor der Übertragungsanordnung derart ausgebildet, daß er während des abfallenden Signalteils, das die Änderungssteilheit des Farbstörbereiches des verzögerten Farbsignals auf der gesamten Länge des Störbereiches kennzeichnet, des eingangsseitig gebildeten Farbsprungsignals ein Höckersignal an seinem Ausgang erzeugt, das an den Umschaltsteuereingang des Kanalumschalters gelegt ist. Der Kanalumschalter ist dadurch während der Dauer des Höckersignals in den zweiten Schaltzustand geschaltet, in dem er den unverzögerten Kanalteil des Farbkanals mit dem ausgangsseitigen Bereich des Farbkanals verbindet. Die Verzögerungszeit der Verzögerungsschaltung im Leuchtdichtekanal ist in dieser Ausbildung so bemessen, daß sie am Schaltzeitpunkt der Vorderflanke des Höckersignals beendet ist. Dadurch ist außerdem noch sichergestellt, daß der störende Fehlfarbenbereich des Farbsprunges tatsächlich mit einem ungestörten Schwingungsanteil überbrückt ist und daß andererseits diese Überbrückung mit der kürzest möglichen Zeit erfolgt, so daß feine Details des wiederzugebenden Farbfernsehbildes nicht verlorengehen.

Die Erfindung wird nachfolgend anhand vorteilhafter Ausführungsbeispiele näher erläutert. In der zugehörigen Zeichnung zeigen
- Fig. 1: ein Blockschaltbild einer Übertragungsanordnung zur Übertragung von Fernsehsignalen für eine farbsaumarme Wiedergabe eines Farbfernsehbildes auf einem Bildschirm,
- Fig. 2: Diagramme (a) bis (1) zu den an den Stellen (b) bis (1) der in Figur 1 dargestellten Blockschaltung anzutreffenden Signalen,
- Fig. 3a: einen ungestörten Schwingungszug an der ersten Farbsprungsstelle des im Diagramm (a) der Figur 2 schematisch dargestellten Farbsignales,
- Fig. 3b: den tatsächlichen Schwingungsverlauf der in Fig. 3a dargestellten Schwingung im ersten Farbstörbereich des Diagrammes (c) der Figur 2,
- Fig. 4: Diagramme (a) bis (1) zu den an den Stellen (b) bis (1) der in Figur 1 dargestellten Blockschaltung anzutreffenden Signalen, mit einer besonderen Ausbildung der Farbsprungdetektion,
- Fig. 5: ein Blockschaltbild einer gegenüber Figur 1 einfacheren Übertragungsanordnung zur Übertragung von Fernsehsignalen für eine farbsaumarme Wiedergabe eines Farbfernsehbildes auf einem Bildschirm,
- Fig. 6: Diagramme (a) bis (1) zu den an den Stellen (b) bis (1) der in Figur 5 dargestellen Blockschaltung anzutreffenden Signale.

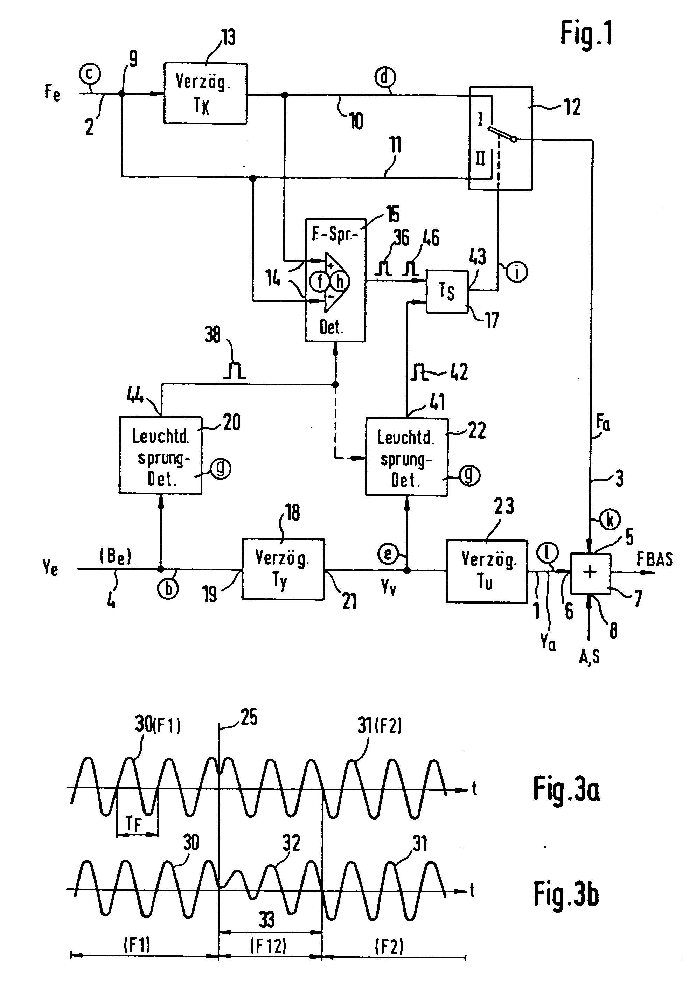

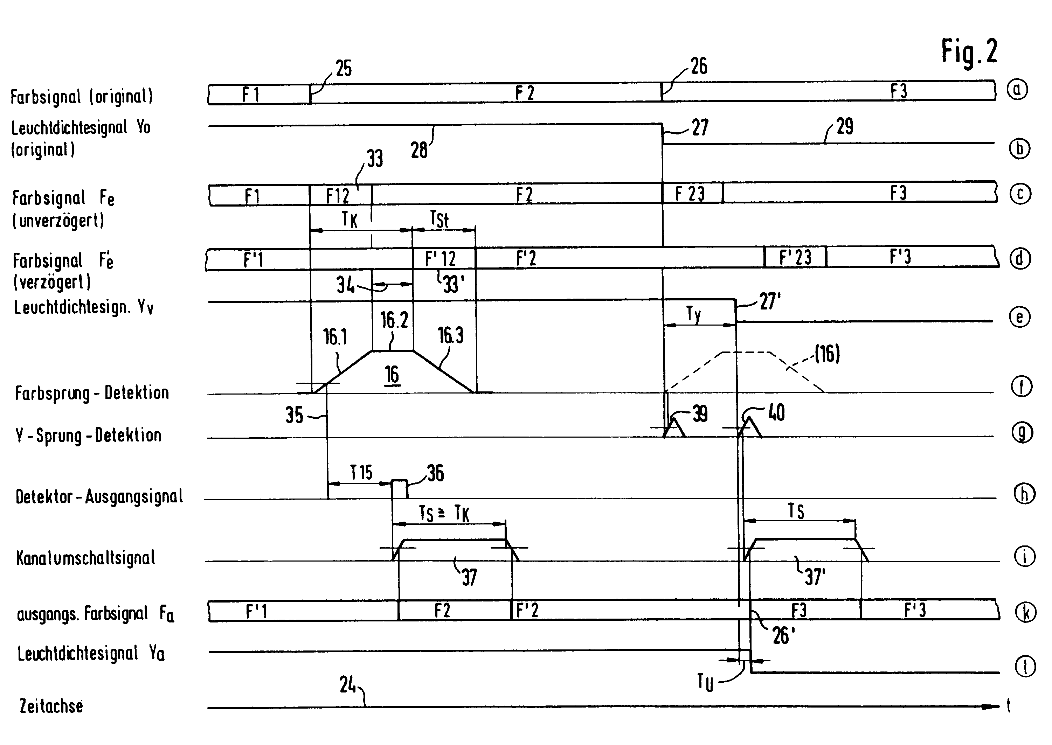

Figur 1 zeigt ein Blockschaltbild einer Anordnung zur Übertragung von Fernsehsignalen für die Wiedergabe eines Farbfernsehbildes auf einem nicht näher dargestellten Bildschirm, die im dargestellten Ausführungsbeispiel unmittelbar vor den Ausgang 3 des wiedergabeseitigen Farbkanals 2 und den Ausgang 1 des wiedergabeseitigen Leuchtdichtekanals 4 eines Videorecorders geschaltet ist. Die Ausgänge 3 und 1 des Farbkanals 2 und des Leuchtdichtekanals 4 sind mit den Signaleingängen 5 und 6 einer Addierschaltung 7 verbunden, an deren dritten Signaleingang 8 die zugehörigen Austastsignale A und Synchronsignale S eines sogenannten FBAS-Signal für eine normgerechte Farbbildübertragung angelegt sind. Der an den Farbkanal 2 angeschlossene Eingang der Übertragungsschaltung ist an einem Gabelpunkt 9 in einen verzögerten Kanalteil 10 und einen unverzögerten Kanalteil 11 aufgespalten. Beide Kanalteile enden je am Signaleingang eines Kanalumschalters 12, der in einem ersten Schaltzustand I den Ausgang des verzögerten Kanalteils mit dem Ausgang 3 des Farbkanals 2 verbindet und der in einem zweiten Schaltzustand II den Ausgang des unverzögerten Kanalteils 11 mit dem Ausgang 3 des Farbkanals 2 verbindet. Der verzögerte Kanalteil 10 enthält eine Verzögerungsleitung 13, deren Verzögerungszeit T_{K} ein exakt ganzes Vielfaches der Schwingungszeit T_{F} einer eingangsseitigen Farbträgerschwingung Fₑ ist, die auf dem Farbkanal 2 übertragen wird. An den Ausgang des verzögerten Kanalteils 10 und an den Ausgang des unverzögerten Kanalteils 11 sind im dargestellten Ausführungsbeispiel die Signaleingänge 14 eines Farbsprungdetektors 15 gelegt. Der Farbsprungdetektor 15 wertet ein an seinen Signaleingängen 14 gebildetes Farbsprungsignal 16 aus, das im Diagramm (f) der Figur 2 dargestellt ist, und erzeugt daraus ein Schaltsignal 36 für eine Steuerschaltung 17 des Kanalumschalters 12, die den Kanalumschalter 12 für eine bestimmte Schaltzeit T_{S} vom ersten Schaltzustand I in den zweiten Schaltzustand II steuert.

Der Leuchtdichtekanal 4 enthält im Bereich der Übertragungsanordnung zur Unterdrückung eines störenden Farbsaumes an einer senkrechten Farbkante eine erste Verzögerungsschaltung 18, an deren Signaleingang 19 ein erster Leuchtdichtesprungdetektor 20 angeschlossen ist und an deren Signalausgang 21 ein zweiter Leuchtdichtesprungdetektor 22 angeschlossen ist, und eine zweite Verzögerungsschaltung 23 mit der Verzögerungszeit Tᵤ.

Die Wirkungsweise der oben beschriebenen Übertragungsanordnung wird anhand der Diagramme (a) bis (1) der Figur 2 näher erläutert. Die waagrechte Achse dieser Diagramme ist eine gemeinsame Zeitachse 24 mit der fortlaufenden Zeit t. Die Balken der Diagramme (a), (c), (d) und (k) sind schematische Darstellungen von Farbsignalen. Im dargestellten Ausführungsbeispiel sind diese Farbsignale Farbträgerschwingungen, denen die Farbart in Gestalt von Amplitude und Phase aufmoduliert ist und die in den Figuren 3a und 3b detailliert dargestellt sind. Jede Senkrechte über der Zeitlinie 24 stellte den augenblicklichen Signalzustand der in den Diagrammen (a) bis (1) dargestellten Signale zum Zeitpunkt t dar.

Das Diagramm (a) stellt das Farbsignal eines Ausschnittes einer Videozeile dar und das Diagramm (b) das zugehörige Leuchtdichtesignal an der gleichen Stelle der Videozeile. Es wird davon ausgegangen, daß die Signale dieser beiden Diagramme (a) und (b) ungestört sind. Im dargestellten Ausschnitt enthält die Videozeile drei Farben F1, F2 und F3, beispielsweise grün, gelb und rot. Diese unterscheiden sich im dargestellten Ausführungsbeispiel durch die Phasenlage der Farbträgerschwingungen zueinander. Dadurch befinden sich in dem in Fig. 2 dargestellten Bereich einer Videozeile zwei Farbsprünge 25 und 26, jeweils zwischen den Farben F1 und F2 sowie den Farben F2 und F3. An der Stelle des zweiten Farbsprunges 26 befindet sich außerdem ein Leuchtdichtesprung 27, an dem die Leuchtdichte von einem höheren Leuchtdichtewert 28 auf einen geringeren Leuchtdichtewert 29 springt.

Das Verhalten der ungestörten Farbträgerschwingung am Farbsprung 25 zwischen der Farbe F1 und der Farbe F2 ist für die beiden, den beiden Farben F1 und F2 zugeordneten Farbträgerschwingungen 30 und 31 in Figur 3a schematisch dargestellt. Die Farbsignale der beiden Farben F1 und F2 unterscheiden sich durch die Phasenlage der sonst gleichen Farbträgerschwingungen 30 und 31. Dieser Phasensprung an der Farbsprungstelle 25 wird infolge der begrenzten Bandbreite des Übertragungsweges der Farbsignale und durch Wandlungen des Übertragungsmodus in einen Schwingungszug 32 umgewandelt, der in Figur 3b schematisch dargestellt ist und der in einem an den Farbsprung 25 anschließenden Übergangsbereich, der hier mit Farbstörbereich 33 bezeichnet ist, von der Farbträgerschwingung 30 der Farbe F1 in die Farbträgerschwingung 31 der Farbe F2 überführt. Die Schwingungen 32 im Farbstörbereich 33 weisen eine Phasenlage auf, die zwischen der Phasenlage der beiden Schwingungen 30 und 31 für die Farben F1 und F2 liegen und einer Farbe F12 entsprechen, die im Farbkreis der zugehörigen Farbfernsehübertragung einer Farbe zwischen den Farben F1 und F2 zugehört. In entsprechender Weise entsteht an dem Farbsprung 26 zwischen den Farben F2 und F3 ein Farbstörbereich mit einer im Farbkreis zwischen den Farben F2 und F3 liegenden Fehlfarbe F23, wie dies im Diagramm (c) der Figur 2 schematisch dargestellt ist.

Dieses im Diagramm (c) dargestellte Farbsignal gelangt als Farbsignal Fₑ an den Gabelpunkt 9 der in Figur 1 dargestellten Übertragungsanordnung, während das im Diagramm (b) dargestellte Leuchtdichtesignal nahezu ungestört als Leuchtdichtesignal Yₑ an den Signaleingang 19 der ersten Verzögerungsschaltung 18 des Leuchtdichtekanals 4 der Übertragungsanordnung gelangt. Die Farbstörbereiche 33 mit den störenden Fehlfarben F12 und F23 der auf dem Farbkanal 2 übertragenen Farbsignale Fₑ werden in der in Figur 1 dargestellten Übertragungsanordnung mittels der Verzögerungsleitung 13 und dem Kanalumschalter 12 weitgehend beseitigt. Der Farbstörbereich 33 umfaßt nur eine geringe Anzahl von Farbträgerschwingungen. Die Verzögerungszeit T_{K} der Verzögerungsleitung 13 im verzögerten Kanalteil 10 des Farbkanals 2 ist einerseits derart bemessen, daß sie größer ist als die Breite T_{St} des größten zu erwartenden Farbstörbereiches 33 einschließlich der Detektionszeit des Farbsprungdetektors 15 und andererseits ein exakt ganzzahliges Vielfaches der Schwingungsdauer T_{F} der Farbträgerschwingung 31 ist, damit beim Umschalten des verzögerten und des unverzögerten Kanalteiles auf den Farbkanalausgang 3 die Phasenlage der umzuschaltenden Farbsignale erhalten bleibt. Das durch die Verzögerungsleitung 13 verzögerte, im Diagramm (c) dargestellten Farbsignals Fₑ ist im Diagramm (d) der Figur 2 als verzögertes Farbsignal F'ₑ dargestellt. Der an den Ausgang des verzögerten Kanalteils 10 und des unverzögerten Kanalteils 11 angeschlossene Farbsprungdetektor 15 bildet aus den an seinen Signaleingängen 14 ankommenden Farbsignalen Fₑ und F'ₑ ein Farbsprungsignal 16, das im dargestellten Ausführungsbeispiel aus drei Signalteilen 16.1 bis 16.3 besteht. Der ansteigende erste Signalteil 16.1 kennzeichnet den Störbereich 33 des unverzögerten Farbsignals Fₑ zwischen der Farbe F1 und der Farbe F2 mit der Fehlfarbe F12. Der zweite Signalteil kennzeichnet die Farbsignaldifferenz zwischen den beiden Farben F1 und F2 während der dritte abfallende Signalteil 16.3 den Störbereich des verzögerten-Farbsignals F'ₑ zwischen der Farbe F1 und der Farbe F2 mit der Fehlfarbe F12 kennzeichnet. Der Farbsprungdetektor 15 ist im dargestellten Ausführungsbeispiel derart ausgebildet, daß er die den unverzögerten Farbstörbereich anzeigende ansteigende Rampe 16.1 des Farbsprungsignals 16 detektiert und mit einem an der Detektionsstelle 35 ausgelösten Detektorausgangssignal 36, das in der Zeitlücke 34 zwischen dem unverzögerten und dem verzögerten Farbstörbereich liegt, ein Schaltsignal 37 der Steuerschaltung 17 für den Kanalumschalter 12 auslöst. Dieses Schaltsignal 37, das im Diagramm (i) der Figur 2 schematisch dargestellt ist, hat eine Schaltdauer T_{S}, die mindestens um die Zeiten zur Umschaltung des Kanalumschalters 12 größer ist als die Verzögerungszeit T_{K} der Verzögerungsleitung 13 im verzögerten Kanalteil 10 des Farbkanales 2. Während der Dauer T_{S} des Umschaltsignales 37 der Steuerschaltung 17 ist der Kanalschalter 12 in den zweiten Schaltzustand II umgeschaltet, in dem er den Ausgang des unverzögerten Kanalteiles 11 mit dem Ausgang 3 des Farbkanales verbindet und während dieser Zeit anstelle des durch die Fehlfarbe F'12 gestörten verzögerten Farbstörbereiches der Farbe F'1 das ungestörte Farbsignal der Farbe F2 an den FBAS-Ausgang überträgt, wie im Diagramm (k) schematisch dargestellt ist.

Erfolgt gleichzeitig mit dem Farbsprung 26 ein Leuchtdichtesprung 27, ist es erforderlich, diese beiden Sprünge zeitlich zur Deckung zu bringen. Dazu enthält der Leuchtdichtekanal 4 im Bereich der dargestellten Übertragungsschaltung die erste Verzögerungsschaltung 18, deren Verzögerungszeit T_{Y} So bemessen ist, daß der verzögerte Leuchtdichtesprung 27' sie in die Zeitlücke 34' zwischen dem unverzögerten Farbstörbereich 33 für die Fehlfarbe 23 und dem verzögerten Farbstörbereich 33' mit der gleichen Fehlfarbe 23, hier jedoch zur Kennzeichnung der Verzögerung mit F'23 bezeichnet, gelangt. Das verzögerte Leuchtdichtesignal Yᵥ ist im Diagramm (e) der Figur 2 schematisch dargestellt.

Das Detektorausgangssignal 38 des ersten Leuchtdichtesprungdetektors 20 am Eingang 19 der Verzögerungsschaltung 18, das an der Flanke 39 (Diagramm (g)) des Leuchtdichtesprunges 27 des unverzögerten Leuchtdichtesignals (Diagramm (b)) erzeugt wird, sperrt den Farbsprungdetektor 15 und schaltet im dargestellten Ausführungsbeispiel den zweiten Leuchtdichtesprungdetektor 22 am Ausgang 21 der ersten Verzögerungsschaltung 18 aktiv. Der zweite Leuchtdichtesprungdetektor, der die Flanke 40 eines Leuchtdichtesprunges 27' des im Diagramm (e) dargestellten verzögerten Leuchtdichtesignales Yᵥ abtastet, erzeugt an seinem Ausgang 41 ein die Flanke 40 des Leuchtdichtesprunges 27' des verzögerten Leuchtdichtesignales kennzeichnendes zweites Detektorausgangssignal 42, das im dargestellten Ausführungsbeispiel am Ausgang 43 der Steuerschaltung 17 für den Kanalumschalter 12 ein Umschaltsignal 37' entsprechend dem weiter oben beschriebenen Umschaltsignal 37 auslöst. Auf diese Weise erfolgt die Umschaltung des für die Farbwiedergabe vorgesehenen Farbsignales von der Farbe F'2 auf die Farbe F3 in der Nähe des Leuchtdichtesprunges 27' des verzögerten Leuchtdichtesignales Yᵥ. Um den Leuchtdichtesprung 27' zeitlich in den Farbsprung 26' des ausgangsseitigen Farbsignals Fₐ (Diagramm (k)) zu legen, wird das verzögerte Leuchtdichtesignal Yᵥ in der zweiten Verzögerungsschaltung 23 zusätzlich um die Umschaltzeit T_{U} verzögert, ehe es der Addierschaltung 7 zugeführt wird (Diagramm (1) der Fig. 2).

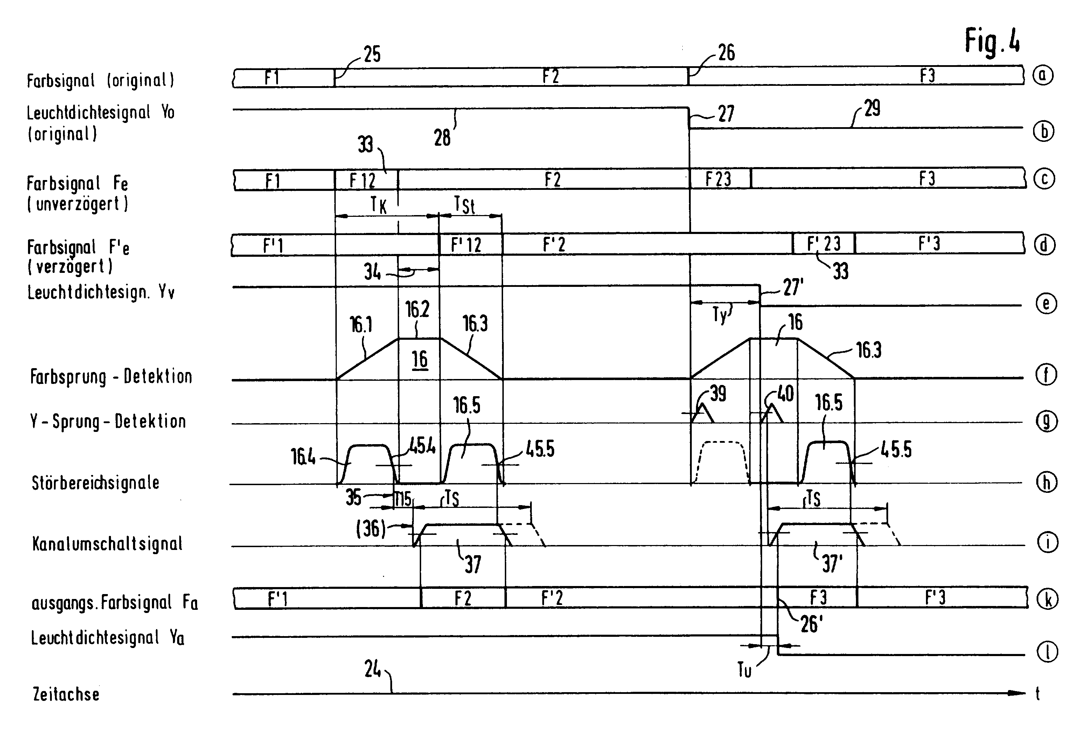

In einer anderen Ausgestaltung des in Figur 1 dargestellten Ausführungsbeispieles einer Übertragungsanordnung bildet der Farbsprungdetektor 15 in einem Farbstörbereich 33, der einen Farbsprung 25 oder 26 im übertragenen Farbsignal kennzeichnet, ein Höckersignal, so daß das vom Farbsprungdetektor 15 gebildete Farbsprungsignal 16 aus zwei Höckersignalen 16.4 und 16.5 besteht, von denen das erste Höckersignal 16.4 an der Stelle des Farbstörbereiches 33 des unverzögerten Farbsignals Fₑ und das zweite Höckersignal 16.5 an der Stelle des Farbstörbereiches des verzögerten Farbsignals Fₑ steht, wie im Diagramm (h) der Figur 4 schematisch dargestellt ist. Die Rückflanke 45.4 des ersten Höckersignals 16.4 bildet das Detektorausgangssignal 36 zum Einschalten der Steuerschaltung 17 zum Umschalten des Kanalumschalters 12 im zweiten Schaltzustand II, falls dieses Detektorausgangssignal 36 nicht durch ein Sperrsignal 38 gesperrt ist. Die Rückflanke 45.5 des zweiten Höckersignals 16.5 des Farbsprungsignals 16 des Farbsprungdetektors 15 erzeugt ein zweites Detektorausgangssignal 46 des Farbsprungdetektors, das das Umschaltsignal 37 oder 37' der Steuerschaltung 17 für den Kanalumschalter 12 ausschaltet. Auf diese Weise wird die Umschaltzeit T_{S} des Kanalumschalters 12 vorzeitig abgebrochen und unmittelbar vom Ende des Farbstörbereiches 33 beendet wie in Diagramm (i) der Figur 4 schematisch dargestellt ist. Dadurch wird erreicht, daß mit der dargestellten Übertragungsschaltung die störfreie Übertragung einer verhältnismäßig hohen Rasterdichte eines Farbrasters ohne wesentliche Farbstörungen auf einem Bildschirm wiedergegeben werden kann. Die übrigen in Fig. 4 dargestellten Diagramme entsprechen den in Fig. 2 mit der gleichen Bezeichnung dargestellten Diagramme.

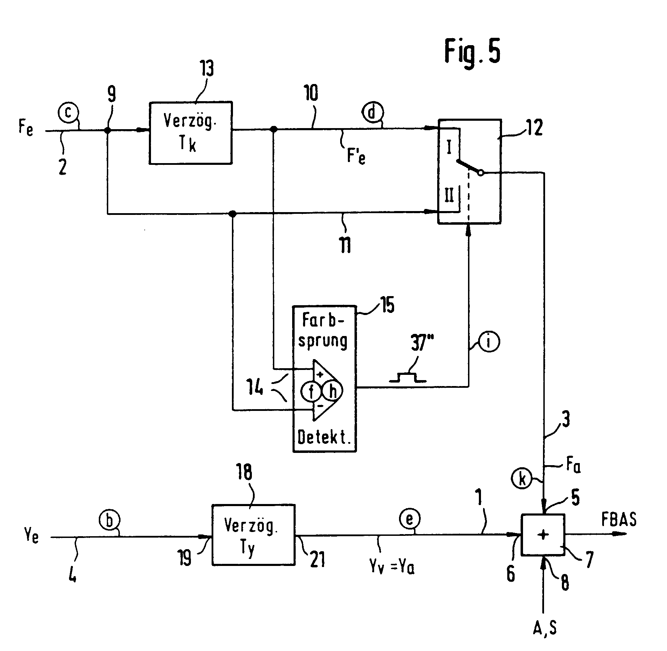

In Figur 5 ist ein weiteres Ausführungsbeispiel einer Übertragungsanordnung zur Übertragung von Fernsehsignalen für eine farbsaumarme Wiedergabe eines Farbfernsehbildes in einem Blockschaltbild dargestellt.

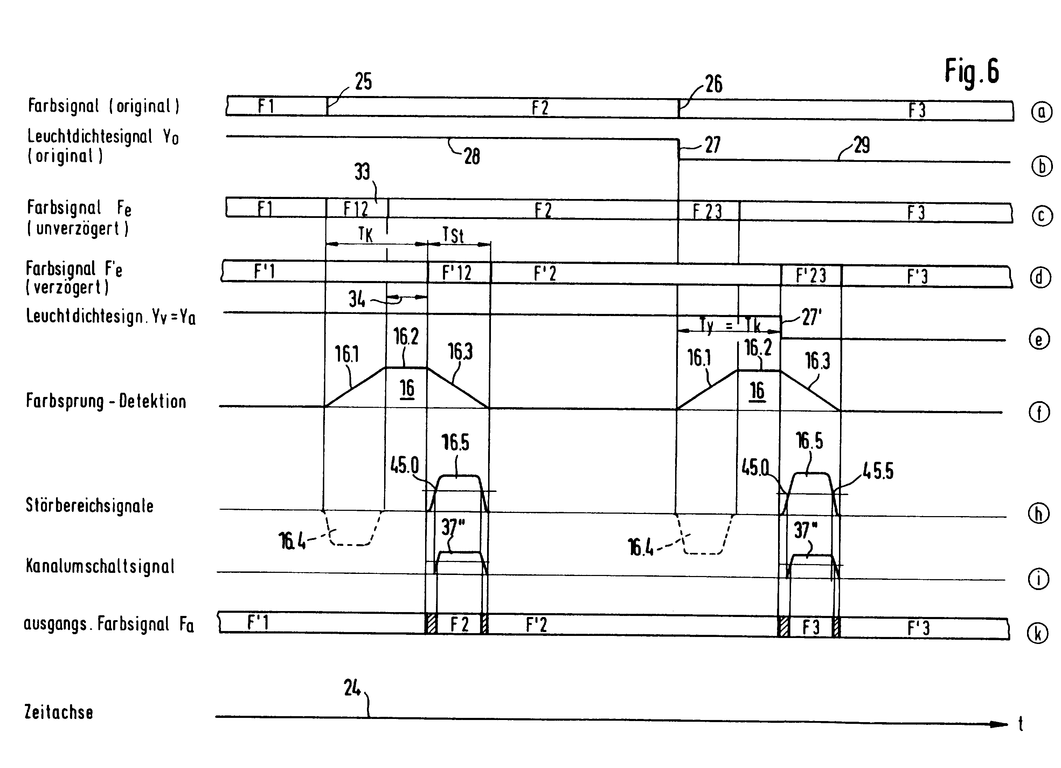

Mit der Figur 1 übereinstimmende Darstellungen sind mit den gleichen Bezugszeichen gekennzeichnet. Die in Fig. 5 dargestellte Anordnung unterscheidet sich von der in Fig. 1 dargestellten Anordnung dadurch, daß im wesentlichen die Leuchtdichtesprungdetektoren entfallen und der Kanalumschalter 12 unmittelbar vom Ausgang des Farbsprungdetektors 15 gesteuert werden kann. Der Farbsprungdetektor ist wie im vorhergehenden Ausführungsbeispiel so ausgebildet, daß er an seinem Eingang ein Farbsprungsignal 16 bildet, das im Diagramm (h) der Figur 6 dargestellt ist und dessen ansteigender Signalbereich 16.1 und abfallender Signalbereich 16.3 den Farbstörbereich 33 des unverzögerten Farbsignals Fₑ und des verzögerten Farbsignals F'ₑ an einem Farbsprung 25 oder 26 kennzeichnet. An dem ansteigenden und dem abfallenden Signalteil 16.1 bzw. 16.3 des Farbsprungsignals 16 bildet der Farbsprungdetektor 15 je ein Höckersignal 16.4 und 16.5 unterschiedlicher Richtung, von denen der Farbsprungdetektor 15 nur das zweite, den Farbstörbereich 33 des verzögerten Farbsignals F'ₑ kennzeichnende Höckersignal 16.5 auswertet und an seinem Ausgang ein von dessen Vorderflanke 45.0 und Rückflanke 45.5 geprägtes Schaltsignal 37'' zur Umschaltung des Kanalumschalters 12 in den zweiten Schaltzustand II, in dem der Eingang des unverzögerten Kanalteils 11 mit dem Ausgang 3 des Farbkanals 2 verbunden ist, erzeugt, wie in Diagramm (i) der Figur 6 dargestellt ist. Die Zeit, in der der Kanalumschalter 12 in den zweiten Schaltzustand II geschaltet ist, deckt zwar den Farbstörbereich 33' des verzögerten Farbsignals F'ₑ nicht vollständig ab, wie der schematischen Darstellung des Diagramms (k) der Figur 6 entnommen werden kann. Die verbleibenden Störbereiche (schraffiert dargestellte Bereiche im Diagramm (k)) sind jedoch so gering in der Ausdehnung und im Farbunterschied, daß sie das Auge nicht mehr wahrnimmt. Die Verzögerungszeit T_{y} im Leuchtdichtekanal 4 ist so bemessen, daß ein den Farbsprung 26 überlagernder Leuchtdichtesprung 27 in den Schaltzeitpunkt der Vorderflanke des Schaltsignals 37'' für den Kanalumschalter verschoben wird, wie in Diagramm (e) der Figur 6 dargestellt ist. Im übrigen entsprechen die Diagramme (a) bis (d) der Figur 6 den gleichnamigen Diagrammen der Figuren 2 und 4.

## Patentansprüche

1. Anordnung zur Unterdrückung von Farbstörbereichen (33), die während einer Fernsehbildübertragung mit einem Leuchtdichtesignal (Yₑ) und einem Farbsignal (Fₑ) zu einem Bildschirm an vertikalen Farbsprüngen (25, 26) auftreten, enthaltend:
- eine erste Verzögerungsschaltung (18) zum Bereitstellen eines verzögerten Leuchtdichtesignals (Yv),
- einen Farbkanal (2) mit einem ersten Kanalteil (11), der das unverzögerte Farbsignal (Fₑ) bereitstellt und einem zweiten Kanalteil (10) mit einer zweiten Verzögerungsschaltung (13), die ein um eine Verzögerungszeit (T_{K}) verzögertes Farbsignal (F'ₑ) bereitstellt,
- und einen Kanalumschalter (12), der von einer Steuerschaltung (17) betätigt wird, um die Übertragung des Farbsignals (Fe) zu einem Kanalausgang (3) umzuschalten, wobei der Kanalumschalter (12) in einem ersten Schaltzustand (I) das verzögerte Farbsignal (F'ₑ) zum Kanalausgang (3) schaltet
**dadurch gekennzeichnet,** daß ein Farbsprungdetektor (15), der sowohl das verzögerte als auch das unverzögerte Farbsignal auswertet, beim Auftreten eines Farbsprungs (25, 26) ein Schaltsignal (36) für die Steuerschaltung (17) bildet, welche den Kanalschalter (12) für eine Zeitdauer (T_{S}), die größer ist als die Verzögerungszeit (T_{K}) der Verzögerungsschaltung (13), in einem zweiten Schaltzustand (II) umschaltet, bei dem das kontinuierliche, unverzögerte Farbsignal (Fₑ) zum Kanalausgang (3) übertragen wird und daß die Verzögerungszeit (T_{K}) größer ist als die Dauer (T_{St}) des größten zu erwartenden Farbstörbereichs (33).

2. Anordnung nach Anspruch 1, dadurch gekennzeichnet, daß die erste Verzögerungsschaltung (18) in einem Leuchtdichtekanal (4) angeordnet ist, der das Leuchtdichtesignal (Yₑ) zum Bildschirm überträgt.

3. Anordnung nach Anspruch 1, dadurch gekennzeichnet, daß das Farbsignal (Fₑ) auf eine Farbträgerschwingung (30, 31) moduliert ist und daß die Verzögerungszeit (T_{K}) des verzögerten Kanalteils (10) des Farbkanals (2) exakt ein ganzes Vielfaches der Schwingungsdauer (T_{F}) der Farbträgerschwingung ist.

4. Anordnung nach Anspruch 2, gekennzeichnet durch
einen ersten Leuchtdichtesprungdetektor (20), der am Eingang (19) der ersten Verzögerungsschaltung (18) angeschlossen ist und beim Erkennen eines Leuchtdichtesprungs (27) im unverzögerten Leuchtdichtesignal (Ye) ein erstes Detektorsignal (38) erzeugt, das den Farbsprungdetektor (15) sperrt
und einen zweiten Leuchtdichtesprungdetektor (22), der am Ausgang (21) der ersten Verzögerungsschaltung (18) angeschlossen ist und beim Erkennen eines Leuchtdichtesprungs (27') im verzögerten Leuchtdichtesignal (Yv) ein zweites Detektorsignal (42) erzeugt, das über die Steuerschaltung 17 den Kanalumschalter (12) in den zweiten Schaltzustand (II) steuert.

5. Anordnung nach einem der Ansprüche 1 bis 4, dadurch gekennzeichnet,
- daß der Farbsprungdetektor (15) aus den Änderungen (16.1) des unverzögerten Farbsignals (Fₑ) und den Änderungen (16.3) des verzögerten Farbsignals (F'ₑ) jeweils während des Farbstörbereichs (33) je ein Höckersignal (16.4, 16.5) erzeugt
- und daß der Farbsprungdetektor (15) an der Rückflanke (45.5) des zweiten detektierten Höckersignals (16.5) ein Detektorausgangssignal (46) zur Rückstellung des zuvor in den zweiten Schaltzustand (II) geschalteten Kanalumschalters (12) in den ersten Schaltzustand (I) erzeugt.

6. Anordnung nach einem der Ansprüche 1 bis 3, dadurch gekennzeichnet,
daß der Farbsprungdetektor (15) während der Farbstörbereiche (33) im verzögerten Farbsignal (F'ₑ) ein Höckersignal (16.5) für den Kanalumschalter (12) erzeugt,
daß der Kanalumschalter während der Dauer (T5) des Höckersignals (16.5) in den zweiten Schaltzustand (II) geschaltet ist
und daß die Verzögerungszeit (T_{y}) der ersten Verzögerungsschaltung (18) im Leuchtdichtekanal (4) so bemessen ist, daß sie am Schaltzeitpunkt der Vorderflanke (45.0) des Höckersignals beendet ist.

## Claims

1. Arrangement for suppressing colour interference areas (33) which occur during a television picture transmission with a luminance signal (Yₑ) and a colour signal (Fₑ) to a picture screen at vertical colour changes (25, 26), comprising:
- a first delay circuit (18) for providing a delayed luminance signal (Yᵥ),
- a colour channel (2) having a first channel section (11) which provides the undelayed colour signal (Fₑ) and a second channel section (10) having a second delay circuit (13) which provides a colour signal (F'ₑ) delayed by a delay time (T_{K}),
- and a channel changeover switch (12) which is actuated by a control circuit (17) in order to switch over the transmission of the colour signal (Fₑ) to a channel output (3), the channel changeover switch (12) switching the delayed colour signal (F'ₑ) to the channel output (3) to a first switching state (I),
characterized in that a colour-change detector (15) which evaluates both the delayed and the undelayed colour signal forms, when a colour change (25, 26) occurs, a switching signal (36) for the control circuit (17) which switches over the channel switch (12) for a time (T_{S}) exceeding the delay time (T_{K}) of the delay circuit (13) to a second switching state (II) in which the continuous, undelayed colour signal (Fₑ) is transmitted to the channel output (3), and in that the delay time (T_{K}) is greater than the duration (T_{St}) of the largest colour interference area (33) to be expected.

2. Arrangement according to Claim 1, characterized in that the first delay circuit (18) is disposed in a luminance channel (4) which transmits the luminance signal (Yₑ) to the picture screen.

3. Arrangement according to Claim 1, characterized in that the colour signal (Fₑ) is modulated onto a colour subcarrier oscillation (30, 31) and in that the delay time (T_{K}) of the delayed channel section (10) of the colour channel (2) is exactly an integral multiple of the period of oscillation (T_{F}) of the colour subcarrier oscillation.

4. Arrangement according to Claim 2, characterized by
- a first luminance-change detector (20) which is connected to the input (19) of the first delay circuit (18) and, on detecting a luminance change (27) in the undelayed luminance signal (Yₑ), generates a first detector signal (38) which disables the colour-change detector (15),
- and a second luminance-change detector (22) which is connected to the output (21) of the first delay circuit (18) and, on detecting a luminance change (27') in the delayed luminance signal (Yᵥ), generates a second detector signal (42) which sets the channel changeover switch (12) to the second switching state (II) via the control circuit (17).

5. Arrangement according to one of Claims 1 to 4, characterized
- in that the colour-change detector (15) generates one peak-point signal (16.4, 16.5) each from the changes (16.1) in the undelayed colour signal (Fₑ) and the changes (16.3) in the delayed colour signal (F'ₑ) in each case during the colour interference area (33),
- and in that the colour-change detector (15) generates, at the trailing edge (45.5) of the second detected peak-point signal (16.5), a detector output signal (46) for resetting the channel changeover switch (12) previously switched to the second switching state (II) to the first switching state (I).

6. Arrangement according to one of Claims 1 to 3, characterized
- in that the colour-change detector (15) generates a peak-point signal (16.5) for the channel changeover switch (12) during the colour interference areas (33) in the delayed colour signal (F'ₑ),
- in that the channel changeover switch is switched to the second switching state (II) during the period (T5) of the peak-point signal (16.5)
- and in that the delay time (T_{y}) of the first delay circuit (18) in the luminance channel (4) is dimensioned so that it is terminated at the switching point of the leading edge (45.0) of the peak-point signal.

## Revendications

1. Dispositif pour supprimer des zones de perturbation de couleur (33) qui apparaissent au niveau de sauts de chrominance (25, 26) verticaux pendant une transmission d'image de télévision avec un signal de luminance (Yₑ) et un signal de chrominance (Fₑ) vers un écran, comprenant :
- un premier circuit de retard (18) destiné à fournir un signal de luminance (Y_{V}) retardé,
- un canal de chrominance (2) comportant une première partie de canal (11) qui fournit le signal de chrominance (Fₑ) non retardé et une deuxième partie de canal (10) avec un deuxième circuit de retard (13) qui fournit un signal de chrominance (F'ₑ) retardé d'une durée (T_{K}),
- et un commutateur de canal (12) qui est commandé par un circuit de commande (17) pour commuter la transmission du signal de chrominance (Fₑ) sur une sortie de canal (3), le commutateur de canal (12), dans un premier état de commutation (I), commutant le signal de chrominance (F'e) retardé sur une sortie de canal (3),
**caractérisé** en ce qu'un détecteur de saut de chrominance (15), qui traite aussi bien le signal de chrominance retardé que le signal de chrominance non retardé, forme, lors de l'apparition d'un saut de chrominance (25, 26), un signal de commutation (36) pour le circuit de commande (17) qui commute le commutateur de canal (12), pour une durée (T_{S}) qui est supérieure à la durée du retard (T_{K}) du circuit de retard (13), dans un deuxième état de commutation (II) dans lequel le signal de chrominance (Fₑ) continu et non retardé est transmis à la sortie de canal (3), et que la durée du retard (T_{K}) est supérieure à la durée (T_{St}) de la plus grande zone de perturbation de couleur (33) escomptée.

2. Dispositif selon la revendication 1, **caractérisé** en ce que le premier circuit de retard (18) est disposé dans un canal de luminance (4) qui transmet le signal de luminance (Yₑ) à l'écran.

3. Dispositif selon la revendication 1, **caractérisé** en ce que le signal de chrominance (Fₑ) est modulé sur une oscillation porteuse de chrominance (30, 31) et que la durée de retard (T_{K}) de la partie de canal (10) retardée du canal de chrominance (2) est exactement un multiple entier de la durée (T_{F}) de l'oscillation porteuse de chrominance.

4. Dispositif selon la revendication 2, **caractérisé** par
- un premier détecteur de saut de luminance (20) qui est raccordé à l'entrée (19) du premier circuit de retard (18) et qui, lors de la détection d'un saut de luminance (27) dans le signal de luminance (Yₑ) non retardé, produit un premier signal de détecteur (38) qui bloque le détecteur de saut de chrominance (15),
- et un deuxième détecteur de saut de luminance (22) qui est raccordé à la sortie (21) du premier circuit de retard (18) et qui, lors de la détection d'un saut de luminance (27') dans le signal de luminance (Y_{V}) retardé, produit un deuxième signal (42) qui, par l'intermédiaire du circuit de commande (17), commande le commutateur de canal (12) dans le deuxième état de commutation (II).

5. Dispositif selon l'une des revendications 1 à 4, **caractérisé** en ce
- que le détecteur de saut de chrominance (15) produit un signal de pic (16.4, 16.5) respectivement à partir des variations (16.1) du signal de chrominance (Fₑ) non retardé et des variations (16.3) du signal de chrominance (F'ₑ) retardé chaque fois pendant la zone de perturbation de couleur (33),
- et que le détecteur de saut de chrominance (15) produit, au niveau du flanc arrière (45.5) du deuxième signal de pic (16.5) détecté, un signal de sortie de détecteur (46) destiné à ramener dans le premier état de commutation (I) le commutateur de canal (12) commuté préalablement dans le deuxième état de commutation (II).

6. Dispositif selon l'une des revendications 1 à 3, **caractérisé** en ce
- que le détecteur de saut de chrominance (15) produit, pendant les zones de perturbation de couleur (33) dans le signal de chrominance (F'ₑ) retardé, un signal de pic (16.5) pour le commutateur de canal (12),
- que le commutateur de canal est commuté dans le deuxième état de commutation (II) pendant la durée (T5) du signal de pic (16.5)
- et que la durée de retard (T_{y}) du premier circuit de retard (18) dans le canal de luminance (4) est calculée de telle manière qu'elle est achevée au moment de commutation du flanc avant (45.0) du signal de pic.
